# EUROPEAN PATENT SPECIFICATION

(11) **EP 2 604 577 B1**
(45) Date of publication and mention of the grant of the patent: **30.11.2016**
(21) Application number: 11816485.4
(22) Date of filing: 11.08.2011
(51) Int. Cl.: C02F 1/28, C02F 1/44, B01D 24/02, B01D 27/08, C02F 1/50

(54) **WATER-PURIFYING CARTRIDGE**
WASSERREINIGUNGSPATRONE
CARTOUCHE DE PURIFICATION DE L'EAU

(30) Priority: 12.08.2010 JP 2010180950
(43) Date of publication of application: 19.06.2013
(73) Proprietor: Mitsubishi Rayon Cleansui Company, Limited, Tokyo 103-0016 (JP)
(72) Inventor: TAKEDA, Hatsumi, Toyohashi-shi Aichi 440-8601 (JP); HATAKEYAMA, Atsushi, Tokyo 103-0016 (JP)
(74) Representative: Hoffmann Eitle
(86) International application number: PCT/JP2011/068346
(87) International publication number: WO 2012/020822

(56) References cited:
- WO-A1-02/051755
- DE-A1- 4 200 566
- JP-A- H11 503 069
- JP-A- 2001 502 596
- JP-A- 2008 500 159
- JP-A- 2010 162 491

## Description

### Technical Field

The present invention relates to a water purification cartridge and a water purifier provided therewith.

### Background Art

A so-called pot-type water purifier is known as a water purifier provided with a water purification cartridge. This pot-type water purifier has a structure in which a water purification cartridge is interposed between a raw water storage section located on the upside and a purified water storage section located on the downside. The raw water stored in the raw water storage section flows through the water purification cartridge into the purified water storage section under its self-weight and is purified in the water purification cartridge.

Figure 11 illustrates a water purification cartridge 1000 according to Patent Literature 1. The water purification cartridge 1000 contains an adsorbent 1001 as a filtering material and a hollow fiber membrane 1009 arranged in a container. The container is principally constructed of a cylindrical case body 1002b that top is capable of opening and that accommodates the filtering material and a cylindrical cover 1002a that covers the open top of the cylindrical case body 1002b. The cylindrical cover 1002a constitutes a space 1003 which serves as an air collector in the container and an air outlet 1006 for exhausting air bubbles generated in the water purification cartridge is provided at the top center of the cylindrical cover 1002a. Furthermore, a raw water inlet 1004 for taking in raw water is provided on the side of the cylindrical cover 1002a and the raw water inlet 1004 is configured with a mesh member. Furthermore, the hollow fiber membrane 1009 is fixed inside the container with potting resin 1010 and a purified water outlet 1007 for purified water obtained after passing through the filtering material is provided below the potting resin 1010.

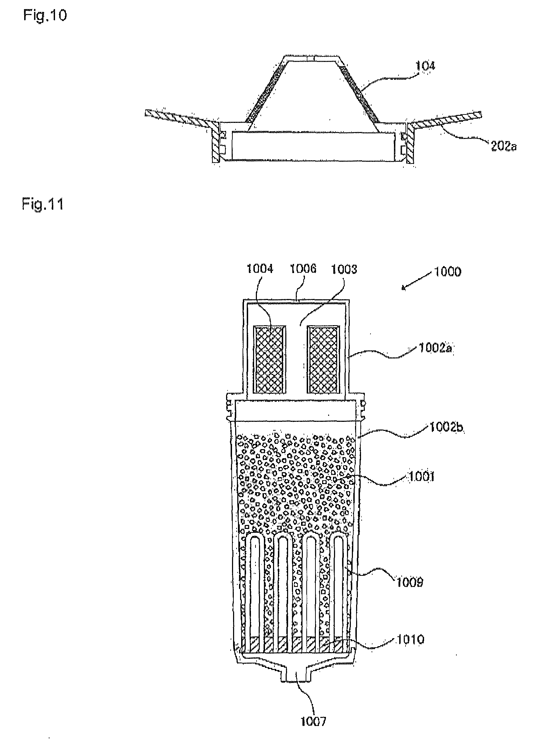

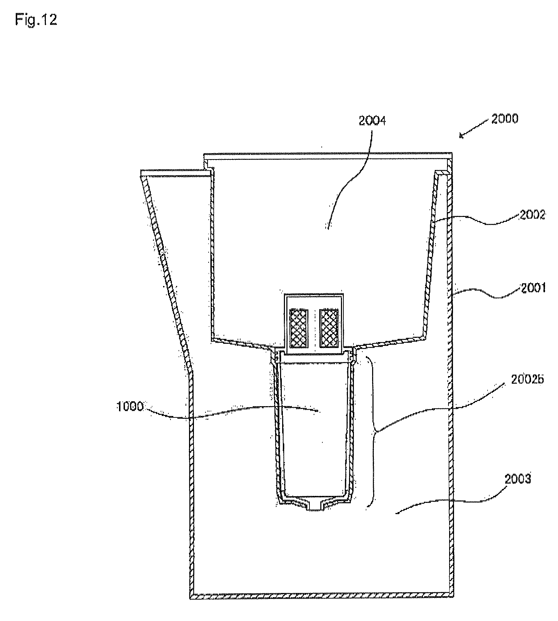

Figure 12 illustrates a schematic diagram of a pot-type water purifier 2000 provided with the water purification cartridge 1000 shown in Figure 11. The water purifier 2000 includes an inner container 2002 that constitutes a raw water storage section 2004 and an outer container 2001 that constitutes a purified water storage section 2003. The inner container 2002 includes a cartridge housing 2002b and the water purification cartridge 1000 is arranged in this cartridge housing 2002b. The raw water stored in the raw water storage section 2004 flows from the raw water inlet 1004 into the water purification cartridge, passes through the water purification section under its own weight and is purified. The purified water obtained flows from the purified water outlet into the purified water storage section 2003.

### Citation List

### Patent Literature

Patent Literature 1: JP2004-230341A
Patent Literature 2: JP11-503069
Patent Literature 3: DE42 00 566 A1

Patent Literature 2 shows a similar cartridge construction as Patent Literature 1 in which no mesh is used at the inlet openings. Patent Literature 3 discloses a cartridge with a planar inlet mesh using a complex construction to evacuate air bubbles from the cartridge.

### Summary of Invention

### Technical Problem

Here, when the raw water inlet with the mesh member described in Patent Literature 1 is formed, the cylindrical cover 1002a and the mesh member are integrally molded. For example, the mesh member is placed at a part corresponding to the raw water inlet of a molding die of the cylindrical cover, a material of the cylindrical cover is poured into the molding die and is left hardened to thereby mold the mesh member integrally with the cylindrical cover.

However, to form the raw water inlet with the mesh member on the side of the cylindrical cover, it is necessary to cause the mesh member to bend along the side of the cylindrical cover and mold the mesh member integrally with the cylindrical cover. That is, a step of working the mesh member into a curved shape or bending and placing the mesh member on the molding die is necessary. From the standpoint of the cost, it is preferable that the water purification cartridge could be manufactured in fewer steps.

Furthermore, bending the mesh member may cause a load to be applied to the mesh member, which may cause durability of the mesh member to deteriorate.

It is therefore an object of the present invention to provide a water purification cartridge which can be manufactured in fewer steps and is provided with a raw water inlet composed of a mesh member having excellent durability.

### Solution to Problem

A water purification cartridge, which is arranged between a raw water storage section and a purified water storage section of a water purifier,
comprising a raw water inlet which introduces raw water inside from the raw water storage section, a filtering material which purifies the raw water taken in from the raw water inlet, a water purification section in which the filtering material is arranged, and a planar section above the water purification section,
wherein the raw water inlet is formed on the planar section with a planar mesh member, and
wherein the planar section is a plane inclined when arranged in the water purifier and the raw water inlet is formed on the inclined plane, and
wherein an air outlet for exhausting air is provided above the raw water inlet,
and wherein the water purification cartridge further comprises a top end face on which the air outlet is provided.

Furthermore, the present invention is a water purifier provided with the above-described water purification cartridge.

### Advantageous Effects of Invention

The water purification cartridge of the present invention does not require any step of bending the mesh member, and can thereby be manufactured in fewer steps. Furthermore, with the water purification cartridge of the present invention, the raw water inlet can be formed with no load being applied to the mesh member.

### Brief Description of Drawings

[Figure 1] Figure 1 is a schematic cross-sectional view illustrating an embodiment of a water purification cartridge of the present invention.
[Figure 2] Figure 2 is a top view of a configuration example of the water purification cartridge shown in Figure 1.
[Figure 3] Figure 3 is a schematic cross-sectional view and a top view illustrating an aspect of the top cover.
[Figure 4] Figure 4 is a schematic cross-sectional view illustrating an aspect of the top cover,
[Figure 5] Figure 5 is a schematic cross-sectional view and a top view illustrating the embodiment of the water purification cartridge of the present invention.

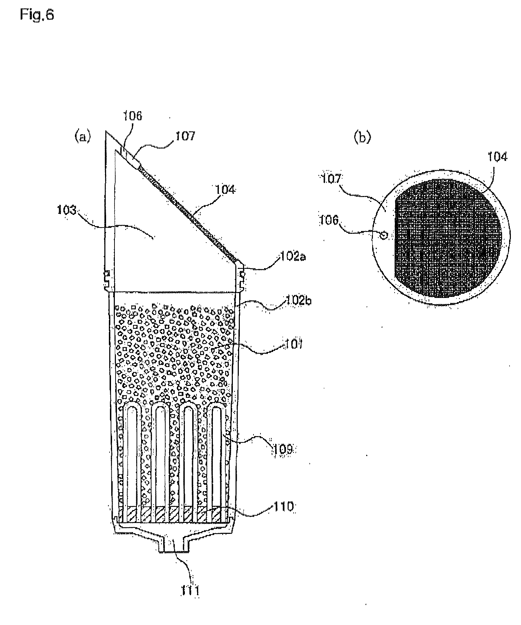

[Figure 6] Figure 6 is a schematic cross-sectional view and a top view illustrating a water purification cartridge in which an air outlet is provided on the inclined plane.
[Figure 7] Figure 7 is a schematic cross-sectional view and a top view illustrating the embodiment of the water purification cartridge of the present invention.
[Figure 8] Figure 8 is an enlarged cross-sectional view of the top cover in Figure 1.
[Figure 9] Figure 9 is a schematic cross-sectional view for illustrating a configuration of a water purifier equipped with the water purification cartridge of the embodiment of the present invention.
[Figure 10] Figure 10 is a schematic cross-sectional view illustrating part of the embodiment of the water purification cartridge of the present invention.
[Figure 11] Figure 19 is a schematic cross-sectional view illustrating a configuration example of a conventional water purification cartridge.
[Figure 12] Figure 12 is a schematic cross-sectional view for illustrating a configuration of a water purifier equipped with the conventional water purification cartridge.

### Description of Embodiments

The present invention relates to a water purification cartridge that is arranged between a raw water storage section and a purified water storage section of a water purifier and purifies raw water using a filtering material.

Hereinafter, an embodiment of the water purification cartridge of the present invention will be described.

### (Embodiment 1)

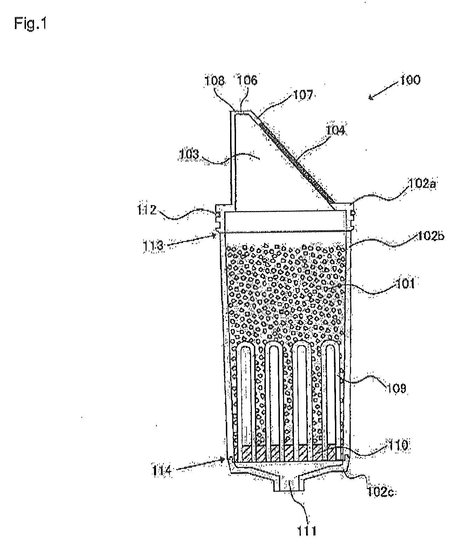

Figure 1 is a schematic cross-sectional view for illustrating a configuration of the water purification cartridge of the present invention. In the present specification, the vertical direction of the water purification cartridge is described relative to a state in which the water purification cartridge is arranged in a water purifier.

In Figure 1, a water purification cartridge 100 includes a container that contains an adsorbent 101 as a filtering material for purifying raw water and a hollow fiber membrane 109. The container is configured by principally including a top cover 102a, a case body 102b in which the filtering material is arranged and a bottom cover 102c having a purified water outlet 111. The top cover 102a includes a convex section 103, a space formed in this convex section 103 functions as an air collector and air such as air bubble is exhausted from an air outlet 106 provided on a top end face 108 of the convex section 103.

Furthermore, the top cover 102a has an inclined plane 107 formed so as to incline from an end of the top end face 108 of the convex section 103. A raw water inlet 104 for introducing raw water into the inside of the cartridge is formed in this inclined plane 107 with a planar mesh member.

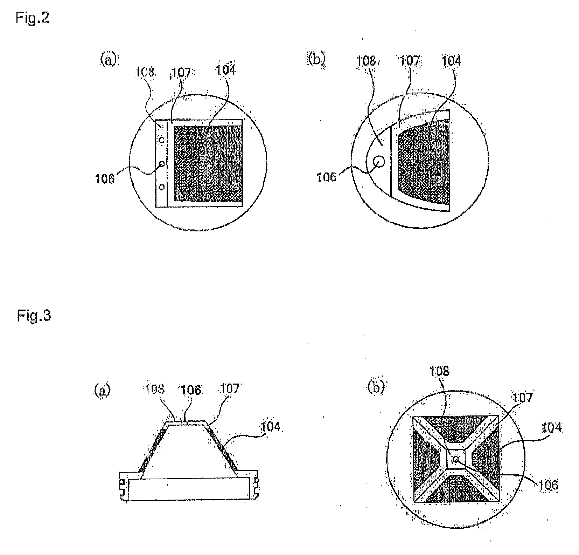

Figure 2 illustrates an example of a top view of the water purification cartridge shown in Figure 1. As shown in Figure 2, the top cover 102a is inclined from the top end face 108 to the bottom end of the convex section 103, forming the inclined plane 107 as a planar section. The raw water inlet 104 is formed in a planar shape on the inclined plane 107 with a planar mesh member.

Furthermore, the adsorbent 101 and the hollow fiber membrane 109 as the filtering material are accommodated in the water purification section which is the inside of the case body 102b. The hollow fiber membrane 109 is fixed to the bottom of the case body 102b with potting resin 110 and accommodated therein. An end of the hollow fiber membrane 109 has opening on a side opposite to the side of the potting resin on which the filtering material is arranged.

Furthermore, the bottom cover 102c having the purified water outlet 111 that exhausts purified water obtained from the raw water filtered by the filtering material is provided at the bottom end of the case body 102b.

The raw water enters the container from the planar raw water inlet 104 provided on the inclined plane 107 as the planar section. The raw water that has entered the container flows downward under its self-weight and is purified by the filtering material such as the adsorbent 101 and the hollow fiber membrane 109. The purified water obtained from the raw water filtered by the filtering material flows from the purified water outlet 111 into the purified water storage section of the water purifier.

In the water purification cartridge of the present invention, the container that accommodates the filtering material has a planar section above the water purification section in which the filtering material is arranged and the raw water inlet is formed in a planar shape in the planar section with a planar mesh member. Adopting such a configuration for the water purification cartridge of the present invention eliminates the need for a step of bending the mesh member, and the water purification cartridge can thereby be manufactured in fewer steps. Furthermore, the raw water inlet can be formed without any load being applied to the mesh member.

Hereinafter, the configuration of the present invention will be described in detail.

As described above, the raw water inlet is formed in a planar shape in the planar section above the water purification section in which the filtering material is arranged with the planar mesh member. The planar section is an inclined plane when the water purification cartridge is arranged in the water purifier. For example, as shown in Figure 1, the raw water inlet can be formed on a planar plane inclined downward from one side at an end of the top end face 108. In Figure 1, an edge of the top end face 108 where the air outlet is provided is configured to contact a top edge of the inclined plane 107. Furthermore, in Figure 1, only one inclined plane is formed in correspondence with one side of the top end face, By providing one inclined plane and forming the raw water inlet on the inclined plane with one mesh member, it is possible to form the wide raw water inlet more easily. Furthermore, providing the raw water inlet on the inclined plane makes it less likely that air bubbles may accumulate in the raw water inlet.

The angle formed between the inclined plane and the horizontal direction may be set to, for example, 10° to 90°, preferably to 40° to 70°, and more preferably to 45° to 65°, By setting the angle of the inclined plane to 40° or more, it is possible to prevent the air such as air bubbles from accumulating in the raw water inlet and make it easier to collect the air in an upper part. Furthermore, setting the angle of the inclined plane to 70° or less can makes it easier to suppress the height of the container to within a preferable range.

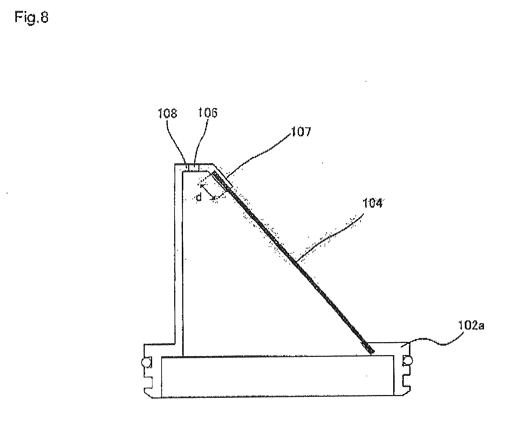

The raw water inlet can be formed through insertion molding with a planar mesh member. Figure 8 is an enlarged cross-sectional view of the top cover shown in Figure 1 illustrating a state in which the mesh member is insertion-molded. By insertion-molding the planar mesh member in the planar section, it is possible to form the raw water inlet in fewer steps without causing any load to be applied to the mesh member.

From the standpoint of strength, the distance the mesh member is inserted into the planar section (d in Figure 8) is preferably set to 1 to 7 mm and more preferably to 2 to 5 mm.

The material of the container is not particularly limited, but, for example, ABS resin, polycarbonate resin, methacryl resin, polypropylene resin, polystyrene resin, MS resin, nylon resin or the like may be used from the standpoint of the mechanical strength and moldability or the like.

The material of the mesh member is not particularly limited, but, for example, metal such as stainless steel, synthetic resin such as polypropylene, polyethylene, ABS, polyester, nylon or fiber such as cotton or silk may be used as the material. Any shape may be adopted as long as it is a mesh member having an opening such as melt-molded product, woven fabric, non-woven fabric cloth, sintered body. The opening preferably has a size smaller than the minimum grain size of the adsorbent.

The material for the filtering material is a material having the function of purifying raw water, and examples thereof include adsorbent and hollow fiber membrane.

Examples of the adsorbent include powdered adsorbent, granular adsorbent resulting from granulating the powdered adsorbent, and fibrous adsorbent. Examples of such an adsorbent include natural-product-based adsorbent (natural zeolite, silver zeolite, acid clay or the like), or inorganic adsorbent such as compound-based adsorbent (synthetic zeolite, bacterial adsorption polymer, phosphate ore, molecular sheave, silica gel, silica alumina gel, porous glass or the like). Furthermore, activated carbon is preferably used as the adsorbent, and examples of activated carbon include powdered activated carbon, granular activated carbon, fibrous activated carbon, block-shaped activated carbon, extrusion molding activated carbon, molded activated carbon, compound-based granular activated carbon, compound-based fibrous activated carbon. Furthermore, in addition to inorganic adsorbent, organic adsorbent may also be used as the adsorbent, and examples of the organic adsorbent include molecular adsorption resin, ion exchange resin, ion exchange fiber, chelate resin, chelate fiber, high absorption resin, high water-absorptive resin, oil-absorption resin, oil absorbent. Among these materials, activated carbon having excellent adsorbability of organic compound such as residual chlorine in raw water, mold odor or trihalomethane is preferably used.

In general, since the finer the adsorbent is, the larger the specific surface area is, the reaction speed increases, thereby the purification capability increases. On the other hand, when the adsorbent is too fine, the adsorbent is more likely to leak from the air outlet and the raw water inlet. Thus, in the case of a granular adsorbent, the grain size at which cumulative oversize mass becomes 95% is preferably 0.35 mm or more.

The activated carbon preferably has properties such as a filling density of 0.1 to 0.6 g/ml, amount of adsorption of iodine of 800 to 4000 mg/g and granularity of 0.075 to 6.3 mm. Furthermore, when silver is loaded to activated carbon, it is possible to suppress reproduction of bacteria and microbes.

When activated carbon is used as the adsorbent, the mass of activated carbon in the water purification cartridge can be set to, for example, within a range of 10 to 200 g.

The hollow fiber membrane is not particularly limited, but examples thereof include various materials based on cellulose, polyolefin (polyethylene, polypropylene), polyvinyl alcohol , ethylene/vinyl alcohol copolymer, polyether, polymethyl methacrylate (PMMA), polysulfone, polyacrylonitrile, polytetrafluoroethylene (Teflon (registered trademark)), polycarbonate, polyester, polyamide, aromatic polyamide. Among these materials, polyolefin-based hollow fiber membrane such as polyethylene and polypropylene is preferable in consideration of operability and workability of hollow fiber membrane, or further, incinerability when disposed of.

Furthermore, though not particularly limited, the hollow fiber membrane preferably has an outside diameter of 20 to 2000 µm, pore size of 0.01 to 1 µm, porosity of 20 to 90%, and film thickness of 5 to 300 µm. Furthermore, the hollow fiber membrane is preferably so-called hydrophilic hollow fiber membrane having a hydrophilic group on the surface.

The adsorbent is not particularly limited, but the absorbent can be contained in the container using a barrier through which purified water can pass and which can contain the adsorbent in the container. Furthermore, when the hollow fiber membrane is accommodated in the container with potting resin, the potting resin functions as a substitute for the barrier.

Furthermore, the adsorbent and the hollow fiber membrane are preferably contained in the container as a filtering material. Regarding the arrangement of the adsorbent and the hollow fiber membrane, it is preferable that the adsorbent be placed on the upstream side and the hollow fiber membrane be placed on the downstream side as shown in Figure 1.

The shape of the air outlet is not particularly limited, but it can be circular, ellipsoidal or polygonal, or undefined.

The shape of the air outlet can be selected as appropriate, and, for example, the diameter of the air outlet may be set to 0.6 mm or more. By setting the diameter of the air outlet to 0.6 mm or more, it is possible to immediately exhaust air to the outside. Furthermore, the shape of the air outlet may also be selected in consideration of the size of the adsorbent accommodated in the container. The aforementioned diameter refers to a diameter in the case of a circular shape, a major axis in the case of an ellipsoidal shape, the longest diagonal in the case of a polygon and the largest width in the case of an undefined shape.

The air outlet is provided on the top end face of the container.

The shape of the container is not particularly limited as long as it has the configuration of the present invention. For example, as shown in Figure 1, the container may be principally constructed of the case body 102b that accommodates the filtering material and makes up the water purification section, the top cover 102a that covers the top-end opening of the case 102b and the bottom cover 102c arranged at the bottom end of the case body 102b.

In the case of the configuration example shown in Figure 1, the bottom end of the top cover 102a and the top end of the case body 102b have the same shape and are coupled by a top coupling section 113. The coupling method is not particularly limited, and, for example, a technique such as adhesion and fusion may be used. Similarly, the bottom end of the case body 102b and the top end of the bottom cover 102c have the same shape and are coupled by a bottom coupling section 114.

The shape of the case body 102b is not particularly limited, but may be columnar (cylindrical), elliptic cylindrical, polygonal prismatic or the like. The shape of the bottom end of the top cover 102a can be selected as appropriate according to the shape of the case body 102b.

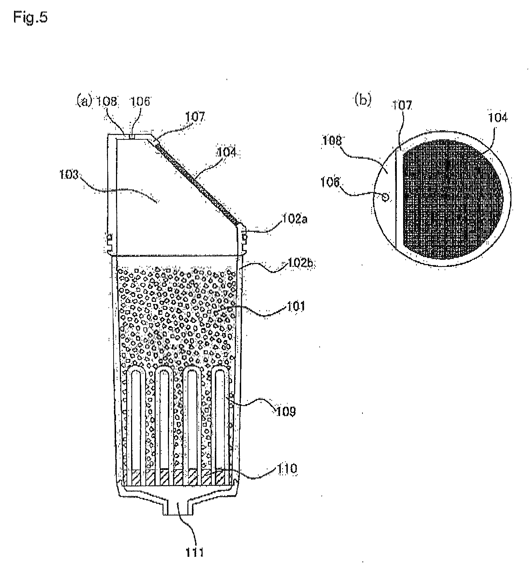

Furthermore, as one embodiment, Figure 5 shows a water purification cartridge made up of a cylindrical case body 102b and a quasi-cylindrical top cover 102b having the same diameter as that of the cylindrical case body.

Furthermore, a top end face is
provided and an air outlet is formed on the top end face.

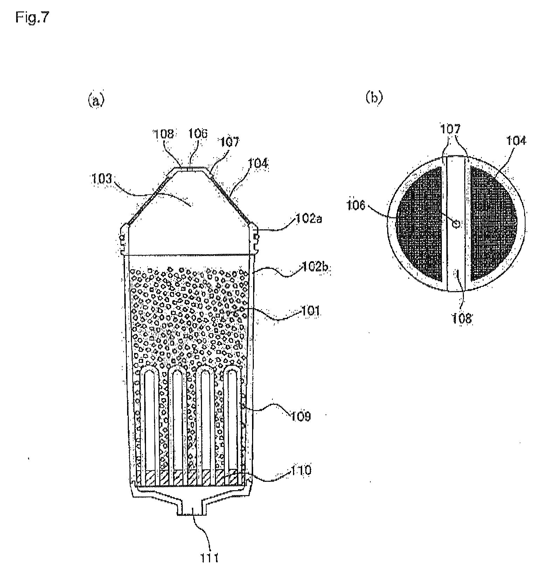

Furthermore, as shown in Figure 7, a container may be formed so as to have two inclined planes 107 as the planar section in which a raw water inlet 104 is formed. In Figure 7, there are two inclined planes 107 that are inclined from both edges of the top end face and the raw water inlet 104 is formed on each of the two inclined planes with a mesh member.

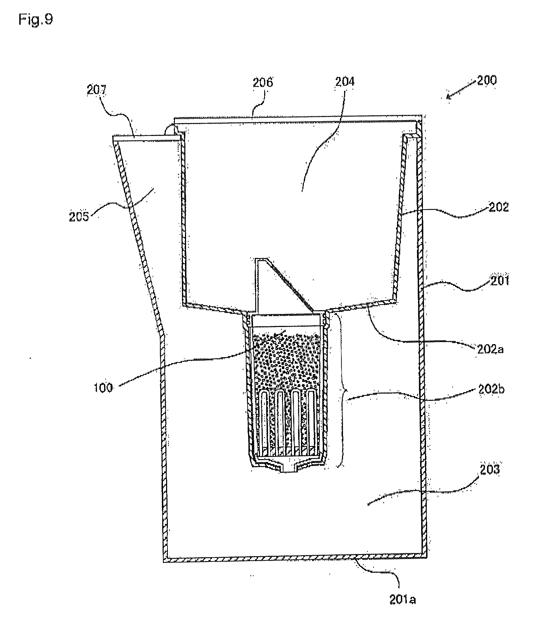

Figure 9 illustrates a configuration example of a water purifier provided with the water purification cartridge shown in Figure 1.

The water purifier 200 shown in Figure 9 is a so-called pot-type water purifier. The water purifier 200 is principally constructed of a raw water storage section 204 that supplies and stores raw water such as tap-water, a water purification cartridge 100 mounted at the bottom of the raw water storage section 204, and a purified water storage section 203 located below the raw water storage section 204 and the water purification cartridge. The raw water stored in the raw water storage section 204 is purified when passing through the water purification cartridge under its own weight and flows down to the purified water storage section 203.

The water purifier 200 is provided with an open top-end, bottomed cylindrical outer container 201 and an open top-end, bottomed cylindrical inner container 202 which is inserted from the top end opening of the outer container 201 and arranged in the outer container 201. The inner container 202 is arranged at a depth half or less the depth of the outer container 201, tightly fitted into the portion of the upper half part of the outer container 201 except a predetermined clearance 205 to thereby form the raw water storage section 204 in the inner container 202. The purified water storage section 203 is provided between a bottom wall 202a of the inner container 202 and a bottom wall 201 a of the outer container 201. The clearance 205 is formed so as to extend upward from purified water storage section 203 and functions as a pouring path when pouring purified water.

A top cover 206 is fitted in the top-end opening of the inner container 202. For example, an openable/closable flap may be provided at the center of the top cover 206 so as to open a water inlet or close the water inlet from above.

Furthermore, the opening formed at the top end of the clearance 205 functions as a pouring inlet and the pouring inlet is provided with a cover 207.

The bottom wall 202a of the inner container is provided with a container 202b that accommodates a water purification cartridge and the bottom wall 202a of the inner container is formed into a gentle downward slope toward the container 202b. The container 202b of the water purification cartridge is recessed into the bottom wall 202a of the inner container toward the purified water storage section. The water purification cartridge is fitted into the container 202b from above. The container 202b has an opening at the center bottom thereof and has a structure in which the raw water storage section 204 communicates with the purified water storage section 203 located below via the container 202b and this opening at the bottom, that is, the water purification cartridge fitted in the container 202b.

Furthermore, the present embodiment adopts a sealed structure by providing a groove for arranging an elastic body 112 such as a gasket on the side of the top cover 102a so that the elastic body 112 provides hermetic sealing. Adopting such a sealed structure allows the cartridge to be accommodated hermetically sealed in the cartridge housing 202b of the inner container 202 as shown in Figure 9.

Furthermore, in order to introduce the raw water in the raw water storage section 204 into the cartridge, the bottom end of the raw water inlet is preferably located at the same height as the top end of the opening of the cartridge housing 202b or below.

### (Embodiment 2)

Figure 1 has shown a configuration example where only one inclined plane 107 is formed, but the present invention is not particularly limited to this, and as shown in Figure 3, a plurality of inclined planes 107 can be formed. In Figure 3, a plurality of inclined planes are formed so as to correspond the respective edges of the top end face 108, and raw water inlets are formed on the respective inclined planes. The raw water inlet may be formed on at least one of these inclined planes.

For example, the top of the container may have a polygonal pyramid shape, and the raw water inlet may be provided on the side of this polygonal pyramid. To be more specific, a top cover having a convex section of a polygonal pyramid may be formed and the raw water inlet may be formed on the side of the polygonal pyramid with a planar mesh member.

Furthermore, adopting a container having a polygonal-pyramid-shaped top allows the shape of the raw water inlet at the bottom end to be formed of sides. That is, in order to introduce raw water placed in the raw water storage section into the inside thereof, the raw water inlet is normally formed so that the bottom end of the raw water inlet has the same height as the top end of the opening of the above-described cartridge housing or below. In that case, if the raw water inlet is formed into, for example, a circular shape with a mesh member, the efficiency of introducing raw water decreases at the bottom end of the raw water inlet, and therefore if raw water placed in the raw water storage section decreases and the height of the raw water decreases, the efficiency of introducing the raw water into the inside of the container may decrease. Thus, as in the case of the present embodiment, adopting the container having a polygonal-pyramid-shaped top allows the bottom end of the raw water inlet to be easily formed of sides and makes it possible to secure the area below the raw water inlet. Furthermore, adopting the polygonal pyramid shape makes it possible to efficiently taken in the raw water from the circumferential direction.

A more specific preferred example of the present embodiment is shown in Figure 10. Figure 10 is a partial schematic cross-sectional view of the water purification cartridge having the configuration shown in Figure 3 arranged in the cartridge housing. For simplicity, Figure 10 only shows the top cover portion of the water purification cartridge. As shown in Figure 10, the raw water inlet 104 is preferably formed on sides of the polygonal pyramid down to the bottom end (bottom end of the convex section) of the sides. Furthermore, the bottom end of the convex section is preferably formed of a horizontal surface and the bottom end of the convex section is preferably formed so as to be arranged at the same height as the top end of the opening of the cartridge housing or below, Adopting such a configuration makes it possible to more efficiently introduce raw water of the raw water storage section into the container.

### (Embodiment 3)

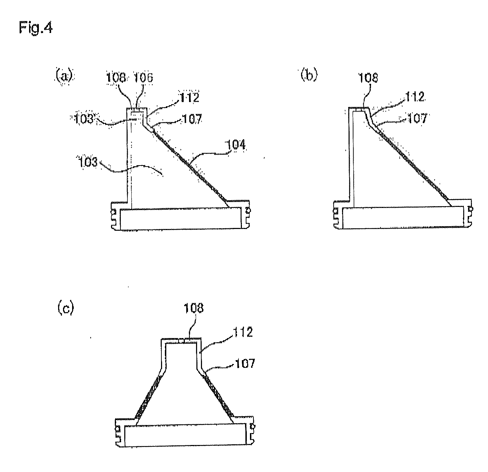

Figure 1 has illustrated a configuration example where the inclined plane 107 as the planar section is formed inclined from the end of the top end face 108. The present embodiment will show a configuration example that has a plane between the top end face and the inclined plane, in which plane the portion contacting the inclined plane is positioned below the top end face 108. That is, in the present embodiment, as shown in Figure 4, a protruding part 103' is formed which extends upward from the top end of the inclined plane 107. The upside of the protruding part 103' is made up of a top end face 108 and an air outlet 106 is formed on the top end face 108. The inclined plane 107 is connected to the top end face 108 via a side 112 of the protruding part 103'. Provision of the protruding part makes it easier to pick up the water purification cartridge.

The side 112 of the protruding part 103' is not particularly limited to the vertical direction and may also have a slope as shown in Figure 4(b).

Furthermore, as shown in Figure 4(c), a configuration may also be adopted in which the protruding part 103' is provided at the top of the polygonal pyramid shown as the example in Embodiment 2. Figure 4(c) shows a configuration in which the protruding part is provided on a polygonal-pyramid-shaped side structure. That is, a configuration may be adopted in which the protruding part is provided on the polygonal-pyramid-shaped side structure, the air outlet is provided at the top end of the protruding part and the raw water inlet is provided down to the bottom end on the sides of the side structure.

### Description of Symbols

100 Water purification cartridge
101 Adsorbent
102a Top cover
102b Case body
102c Bottom cover
103 Convex section
103' Air collector
104 Raw water inlet
106 Air outlet
107 Planar section (or inclined plane)
108 Top end face
109 Hollow fiber membrane
110 Potting resin
111 Purified water outlet
112 Elastic body
113 Top coupling section
114 Lower coupling section
200 Water purifier
201 Outer container
201a Bottom wall of outer container
202 Inner container
202a Bottom wall of inner container
202b Cartridge housing
203 Purified water storage section
204 Raw water storage section
205 Clearance
206 Top cover
207 Pouring cover

## Claims

1. A water purification cartridge (100), which is arranged between a raw water storage section (204) and a purified water storage section (203) of a water purifier (200),
comprising a raw water inlet (104) which introduces raw water inside from the raw water storage section, a filtering material (101, 109) which purifies the raw water taken in from the raw water inlet, a water purification section in which the filtering material is arranged, and a planar section (107) above the water purification section,
wherein the raw water inlet is formed on the planar section with a planar mesh member, and
wherein the planar section is a plane inclined when arranged in the water purifier and the raw water inlet is formed on the inclined plane, and
wherein an air outlet (106) for exhausting air is provided above the raw water inlet,
and wherein the water purification cartridge further comprises a top end face (108) on which the air outlet is provided.

2. The water purification cartridge according to claim 1, wherein the inclined plane (107) is formed inclined from an end of the top end face (108).

3. The water purification cartridge according to claim 1, further comprising a plane in which a portion contacting said inclined plane is positioned below the top end face, between the top end face and the inclined plane.

4. The water purification cartridge according to claim 1, further comprising a protruding part which extends upward from the top end of the inclined plane, wherein the air outlet is arranged at the protruding part.

5. The water purification cartridge according to any one of claims 1 to 4, further comprising a convex section (103) having the inclined plane (107) at the top,
wherein the raw water inlet is formed to the bottom end of the inclined plane.

6. The water purification cartridge according to claim 5, wherein when arranged in a cartridge housing (202b) located between the raw water storage section and the purified water storage section, a low end of the raw water inlet is located at a same height as the opening top end of the cartridge housing or below.

7. The water purification cartridge according to claim 5 or 6, wherein the convex section comprises only one the inclined plane.

8. The water purification cartridge according to claim 5 or 6, wherein the convex section has a polygonal-pyramid-shaped side structure and the polygonal-pyramid-shaped side structure corresponds to the inclined plane.

9. The water purification cartridge according to any one of claims 5 to 8, at least comprising:
a cylindrical case body (102b) for arranging the filtering material;
a top cover (102a) that has the convex section on a side opposite to the case body and also has a coupling section with the case body.

10. The water purification cartridge according to any one of claims 1 to 9, wherein the raw water inlet is formed by arranging the mesh member in the planar section through insertion molding.

11. A water purifier (200) comprising the water purification cartridge (100) according to any one of claims 1 to 10.

## Patentansprüche

1. Wasseraufbereitungspatrone (100), die zwischen einem Rohwasserspeicherabschnitt (204) und einem Reinwasserspeicherabschnitt (203) eines Wasseraufbereitungsgeräts (200) angeordnet ist,
aufweisend einen Rohwasserzulauf (104), der Rohwasser von innerhalb des Rohwasserspeicherabschnitts einspeist, ein Filtermaterial (101, 109), das das von dem Rohwasserzulauf eingeleitete Rohwasser reinigt, einen Wasseraufbereitungsabschnitt, in dem das Filtermaterial angeordnet ist, und einen ebenen Abschnitt (107), oberhalb des Wasseraufbereitungsabschnitts,
wobei der Rohwassereinlass an dem ebenen Abschnitt mit einem ebenen Gitterelement ausgebildet ist, und
wobei der ebene Abschnitt eine Ebene ist, die geneigt ist, wenn in dem Wasseraufbereitungsgerät angeordnet, und der Rohwassereinlass auf der geneigten Ebene ausgebildet ist, und
wobei ein Luftauslass (106) zum Auslassen von Luft über dem Rohwassereinlass vorgesehen ist,
und wobei die Wasseraufbereitungspatrone ferner eine obere Stirnfläche (108) umfasst, an der der Luftauslass vorgesehen ist.

2. Wasseraufbereitungspatrone nach Anspruch 1, wobei die geneigte Ebene (107) von einem Ende der oberen Stirnfläche (108) aus geneigt ausgebildet ist.

3. Wasseraufbereitungspatrone nach Anspruch 1, ferner umfassend eine Ebene, in der ein Abschnitt, der die geneigte Ebene kontaktiert, unterhalb der oberen Stirnfläche, zwischen der oberen Stirnfläche und der geneigten Ebene, angeordnet ist.

4. Wasseraufbereitungspatrone nach Anspruch 1, ferner umfassend einen vorstehenden Abschnitt, der sich von dem oberen Ende der geneigten Ebene nach oben erstreckt, wobei der Luftauslass an dem vorstehenden Abschnitt angeordnet ist.

5. Wasseraufbereitungspatrone nach einem der Ansprüche 1 bis 4, ferner umfassend einen konvexen Abschnitt (103), der die geneigte Ebene (107) an dem oberen Ende aufweist,
wobei der Rohwasserzulauf an dem unteren Ende der geneigten Ebene ausgebildet ist.

6. Wasseraufbereitungspatrone nach Anspruch 5, wobei, wenn in einem Patronengehäuse (202b) angeordnet, das zwischen dem Rohwasserspeicherabschnitt und dem Reinwasserspeicherabschnitt positioniert ist, ein unteres Ende des Rohwassereinlasses in einer gleichen Höhe positioniert ist, wie das obere Öffnungsende des Patronengehäuses, oder darunter.

7. Wasseraufbereitungspatrone nach Anspruch 5 oder 6, wobei der konvexe Abschnitt nur eine die geneigte Ebene umfasst.

8. Wasseraufbereitungspatrone nach Anspruch 5 oder 6, wobei der konvexe Abschnitt eine polygonal-pyramidenförmige Seitenstruktur aufweist, und die polygonal-pyramidenförmige Seitenstruktur der geneigten Ebene entspricht.

9. Wasseraufbereitungspatrone nach einem der Ansprüche 5 bis 8, zumindest umfassend:
einen zylindrischen Gehäusekörper (102b) zur Anordnung des Filtermaterials;
eine obere Abdeckung (102a), die den konvexen Abschnitt auf einer Seite gegenüber dem Gehäusekörper aufweist, und ebenfalls einen Kupplungsabschnitt mit dem Gehäusekörper aufweist.

10. Wasseraufbereitungspatrone nach einem der Ansprüche 1 bis 9, wobei der Rohwassereinlass durch Anordnen des Gitterelements in dem planaren Abschnitt durch Einsetzgießen ausgebildet ist.

11. Wasseraufbereitungsgerät (200) umfassend die Wasseraufbereitungspatrone (100) nach einem der Ansprüche 1 bis 10.

## Revendications

1. Cartouche de purification d'eau (100), qui est agencée entre une section de stockage d'eau brute (204) et une section de stockage d'eau purifiée (203) d'un épurateur d'eau (200),
comprenant une entrée d'eau brute (104) qui introduit de l'eau brute à l'intérieur de la section de stockage d'eau brute, une matière de filtration (101, 109) qui purifie l'eau brute prélevée par l'entrée d'eau brute, une section de purification d'eau dans laquelle la matière de filtration est agencée et une section plane (107) au-dessus de la section de purification d'eau,
dans laquelle l'entrée d'eau brute est formée sur la section plane avec un élément plan à mailles et
dans laquelle la section plane est un plan incliné quand elle est agencée dans l'épurateur d'eau et l'entrée d'eau brute est formée sur le plan incliné, et
dans laquelle une sortie d'air (106) pour l'échappement d'air est prévue au-dessus de l'entrée d'eau brute,
et dans laquelle la cartouche de purification d'eau comprend en outre une face d'extrémité supérieure (108) sur laquelle la sortie d'air est disposée.

2. Cartouche de purification d'eau selon la revendication 1, dans laquelle le plan incliné (107) est formé incliné à partir d'une extrémité de la face d'extrémité supérieure (108).

3. Cartouche de purification d'eau selon la revendication 1, comprenant en outre un plan dans lequel une partie entrant en contact avec ledit plan incliné est positionnée au-dessous de la face d'extrémité supérieure, entre la face d'extrémité supérieure et le plan incliné.

4. Cartouche de purification d'eau selon la revendication 1, comprenant en outre une partie saillante qui s'étend vers le haut à partir de l'extrémité supérieure du plan incliné, dans laquelle la sortie d'air est agencée sur la partie saillante.

5. Cartouche de purification d'eau selon l'une quelconque des revendications 1 à 4, comprenant en outre une section convexe (103) ayant le plan incliné (107) dans la partie supérieure,
dans laquelle l'entrée d'eau brute est formée sur l'extrémité de fond du plan incliné.

6. Cartouche de purification d'eau selon la revendication 5, dans laquelle, quand elle est agencée dans un logement de cartouche (202b) situé entre la section de stockage d'eau brute et la section de stockage d'eau purifiée, une extrémité inférieure de l'entrée d'eau brute est située à une même hauteur que l'extrémité supérieure d'ouverture du logement de cartouche ou au-dessous.

7. Cartouche de purification d'eau selon la revendication 5 ou 6, dans laquelle la section convexe comprend seulement un plan incliné.

8. Cartouche de purification d'eau selon la revendication 5 ou 6, dans laquelle la section convexe a une structure latérale en forme de pyramide polygonale et la structure latérale en forme pyramide polygonale correspond au plan incliné.

9. Cartouche de purification d'eau selon l'une quelconque des revendications 5 à 8, comprenant au moins :
un corps de boîtier cylindrique (102b) pour agencer la matière de filtration ;
un couvercle supérieur (102a) qui a la section convexe sur un côté opposé au corps de boîtier et a également une section de couplage avec le corps de boîtier.

10. Cartouche de purification d'eau selon l'une quelconque des revendications 1 à 9, dans laquelle l'entrée d'eau brute est formée en agençant l'élément à mailles dans la section plane par moulage par insertion.

11. Épurateur d'eau (200) comprenant la cartouche de purification d'eau (100) selon l'une quelconque des revendications 1 à 10.
